# EUROPEAN PATENT APPLICATION

(11) **EP 4 167 333 A1**
(43) Date of publication of application: **19.04.2023**
(21) Application number: 20940431.8
(22) Date of filing: 10.06.2020
(51) Int. Cl.: H01M 10/052, H01M 10/0565, H01M 10/058, H01M 10/0583

(54) **SECONDARY BATTERY AND METHOD FOR PRODUCING SAME**

(71) Applicant: Terawatt Technology K.K., Yokohama-shi, Kanagawa 226-0026 (JP)
(72) Inventor: OGATA, Ken, Yokohama-shi, Kanagawa 226-0026 (JP); KIM, Jungho, Yokohama-shi, Kanagawa 226-0026 (JP)
(74) Representative: Mewburn Ellis LLP
(86) International application number: PCT/JP2020/022791
(87) International publication number: WO 2021/250803

(57) **Abstract**

The present invention provides a secondary battery that has high energy density, high capacity, excellent cycle characteristics, and high productivity. The present invention relates to a secondary battery including: a laminate formed by alternately folding a sheet at an acute angle a plurality of times, the sheet having a negative electrode that is free of a negative electrode active material, and separators or solid electrolytes disposed on both surfaces of the negative electrode; and a plurality of positive electrodes each disposed in a space between separators or solid electrolytes facing each other formed by folding the sheet.

## Description

### Technical Field

The present invention relates to a secondary battery and to a method for producing such a battery.

### Background Art

In recent years, techniques for converting natural energy such as solar power or wind power into electric energy have attracted more attention. Accordingly, various solid-state batteries have been developed as storage devices that are safe and that can store a large amount of electric energy.

Among these, secondary batteries that charge and discharge by transferring metal ions between a positive electrode and a negative electrode are known to have a high voltage and high energy density, and are usually lithium ion secondary batteries. In a typical lithium ion secondary battery, an active material capable of retaining lithium is introduced into the positive electrode and the negative electrode, and charging and discharging are performed by exchanging lithium ions between the positive electrode active material and the negative electrode active material. A lithium metal secondary battery has also been developed that does not use an active material in the negative electrode, but retains lithium by depositing lithium metal on the surface of the negative electrode.

For example, Patent Document 1 discloses a high energy density, high power lithium metal anode secondary battery with a volumetric energy density greater than 1000 Wh/L and/or a mass energy density greater than 350 Wh/kg when discharged at room temperature at a rate of at least 1C. Patent Document 1 discloses that an ultrathin lithium metal anode is used to realize this lithium metal anode secondary battery.

Patent Document 2 discloses a lithium secondary battery containing a positive electrode, a negative electrode, a separation film interposed between the electrodes, and an electrolyte. In the negative electrode of this lithium secondary battery, metal particles are formed on the negative electrode current collector and move from the positive electrode during charging to form lithium metal on the negative electrode current collector in the negative electrode. Patent Document 2 discloses that this lithium secondary battery can solve problems caused by the reactivity of lithium metal and problems that occur during the assembly process, and has improved performance and a longer service life.

### Citation List

### Patent Literature

Patent Document 1: JP 2019-517722 A
Patent Document 2: JP 2019-537226 A

### Summary of Invention

### Technical Problem

When the present inventors studied secondary batteries of the prior art including those described in the patent documents mentioned above, they found that all of them were insufficient in terms of energy density, capacity, cycle characteristics, and/or productivity.

For example, because a lithium metal secondary battery that retains lithium by depositing lithium metal on the negative electrode surface as described in the patent documents mentioned above has a negative electrode that is free of a negative electrode active material, the energy density thereof is high, but the lithium metal secondary battery has a very thin negative electrode that is difficult to handle. As a result, a mass production technique for such a lithium metal secondary battery has yet to be established. For example, when attempting to laminate a plurality of positive electrodes, negative electrodes, and separators arranged between the positive and negative electrodes using an automatic laminating device of the prior art in order to improve battery capacity and output voltage, fine wrinkles appear in the negative electrode due to the extreme thinness of the negative electrode, and the cycle characteristics of the resulting secondary battery decline. As a result, the lithium metal secondary battery described in the patent documents mentioned above have to be produced manually, which results in low productivity.

In view of these problems, it is an object of the present invention to provide a secondary battery having high energy density, high capacity, excellent cycle characteristics, and high productivity, and a method for producing such a secondary battery.

### Solution to Problem

One aspect of the present invention is a secondary battery comprising: a laminate formed by alternately folding a sheet at an acute angle a plurality of times, the sheet having a negative electrode that is free of a negative electrode active material, and separators disposed on both surfaces of the negative electrode; and a plurality of positive electrodes each disposed in a space between separators facing each other formed by folding the sheet.

Because this secondary battery includes a negative electrode that is free of a negative electrode active material, charge and discharge are performed by depositing metal on the surface of the negative electrode and dissolving the deposited metal. This secondary battery also has a plurality of laminated structures each including a positive electrode, a negative electrode, and a separator interposed between the positive electrode and the negative electrode. As a result, the secondary battery has a high energy density and capacity. Unlike a negative electrode that is free of a negative electrode active material, which is very thin and difficult to handle, the sheet having a negative electrode and separators disposed on both sides of the negative electrode is thick enough and has high enough mechanical strength to be easy to handle. As a result, the secondary battery described above can be automatically manufactured using an automatic laminating device without causing damage or wrinkles in the negative electrode, and the cycle characteristics and productivity are excellent.

Another aspect of the present invention is a secondary battery comprising: a laminate formed by alternately folding a sheet at an acute angle a plurality of times, the sheet having a negative electrode that is free of a negative electrode active material, and solid electrolytes disposed on both surfaces of the negative electrode; and a plurality of positive electrodes each disposed in a space between solid electrolytes facing each other formed by folding the sheet.

Because this secondary battery includes a negative electrode that is free of a negative electrode active material, charge and discharge are performed by depositing metal on the surface of the negative electrode and dissolving the deposited metal. This secondary battery also has a plurality of laminated structures each including a positive electrode, a negative electrode, and a separator interposed between the positive electrode and the negative electrode. As a result, the secondary battery has a high energy density and capacity. Unlike a negative electrode that is free of a negative electrode active material, which is very thin and difficult to handle, the sheet having a negative electrode and solid electrolytes disposed on both sides of the negative electrode is thick enough and has high enough mechanical strength to be easy to handle. As a result, the secondary battery described above can be automatically manufactured using an automatic laminating device without causing damage or wrinkles in the negative electrode, and the cycle characteristics and productivity are excellent.

The secondary battery may be a lithium secondary battery in which charging and discharging are performed by depositing lithium metal on the surface of the negative electrode and dissolving the deposited lithium. This aspect of the present invention has even higher energy density.

The negative electrode is preferably an electrode consisting of at least one selected from the group consisting of Cu, Ni, Ti, Fe, and other metals that do not react with Li, alloys of these metals, and stainless steel (SUS). Because highly flammable lithium metal does not have to be used in this aspect of the present invention during production, safety and productivity are further improved. Also, because the negative electrode is stable, the cycle characteristics of the secondary battery are further improved.

In the secondary battery, preferably no lithium foil is formed on the surface of the negative electrode before initial charging. Because highly flammable lithium metal does not have to be used in this aspect of the present invention during production, safety and productivity are further improved.

Preferably, the positive electrodes are each disposed so as to be separated from the end of a folded portion of the sheet within a range of 0.01 mm or more and 5.00 mm or less. Because the positive electrodes and the negative electrode face each other over an appropriate area via a separator or solid electrolyte in this aspect of the present invention, the energy density and capacity are further increased.

Preferably, the average thickness of the negative electrode is 4 µm or more and 20 µm or less. Because the volume occupied by the negative electrodes in the secondary battery is reduced in this aspect of the present invention, the energy density of the secondary battery is further improved.

Preferably, the energy density is 350 Wh/kg or higher.

The positive electrode may have a positive electrode active material.

Another aspect of the present invention is a method for producing a secondary battery, the method comprising the steps of: preparing a sheet having a negative electrode free of a negative electrode active material and separators disposed on both sides of the negative electrode; and forming an article including a laminate formed by alternately folding the sheet at an acute angle a plurality of times and a plurality of positive electrodes each disposed in a space between separators facing each other formed by folding the sheet.

Because a secondary battery that can be produced using this production method includes a negative electrode that is free of a negative electrode active material, charge and discharge are performed by depositing metal on the surface of the negative electrode and dissolving the deposited metal. The secondary battery produced using this production method also has a plurality of laminated structures each including a positive electrode, a negative electrode, and a separator interposed between the positive electrode and the negative electrode. As a result, a secondary battery produced using this production method has a high energy density and capacity. Unlike a negative electrode that is free of a negative electrode active material, which is very thin and difficult to handle, the sheet having a negative electrode and separators disposed on both sides of the negative electrode is thick enough and has high enough mechanical strength to be easy to handle. Because this production method can automatically produce a secondary battery without any wrinkles in the negative electrode, a secondary battery with high cycle characteristics can be produced with high productivity.

Another aspect of the present invention is a method for producing a secondary battery, the method comprising the steps of: preparing a sheet having a negative electrode free of a negative electrode active material and solid electrolytes disposed on both sides of the negative electrode; forming an article including a laminate formed by alternately folding the sheet at an acute angle a plurality of times and a plurality of positive electrodes each disposed in a space between solid electrolytes facing each other formed by folding the sheet.

Because a secondary battery that can be produced using this production method includes a negative electrode that is free of a negative electrode active material, charge and discharge are performed by depositing metal on the surface of the negative electrode and dissolving the deposited metal. The secondary battery produced using this production method also has a plurality of laminated structures each including a positive electrode, a negative electrode, and a solid electrolyte interposed between the positive electrode and the negative electrode. As a result, a secondary battery produced using this production method has a high energy density and capacity. Unlike a negative electrode that is free of a negative electrode active material, which is very thin and difficult to handle, the sheet having a negative electrode and solid electrolytes disposed on both sides of the negative electrode is thick enough and has high enough mechanical strength to be easy to handle. Because this production method can automatically produce a secondary battery without any wrinkles in the negative electrode, a secondary battery with high cycle characteristics can be produced with high productivity.

The forming step may include a step of folding the sheet by pressing the sheet from a direction opposite the direction of lamination of the laminate while pushing a first flat plate against the sheet from a first direction perpendicular to the direction of lamination of the laminate and pushing a second flat plate against the sheet from a second direction opposite the first direction, and pressing the sheet from a direction opposite the direction of lamination of the laminate to fold the sheet.

The first flat plate and the second flat plate may include the positive electrode and a substrate integrated with the positive electrode, and the positive electrode may be inserted into each space formed by folding the sheet at the same time the sheet is folded in the folding step. In this aspect, because a laminated structure of a positive electrode, a negative electrode, and a separator or a solid electrolyte disposed between the positive electrode and the negative electrode can be formed more easily, productivity is even higher.

The forming step may include a step of inserting the positive electrode into each space formed by folding the sheet after the folding step.

### Effect of Invention

The present invention is able to provide a secondary battery having high energy density, high capacity, excellent cycle characteristics, and high productivity, and a method for producing such a secondary battery.

### Brief Description of Drawings

[Fig. 1]

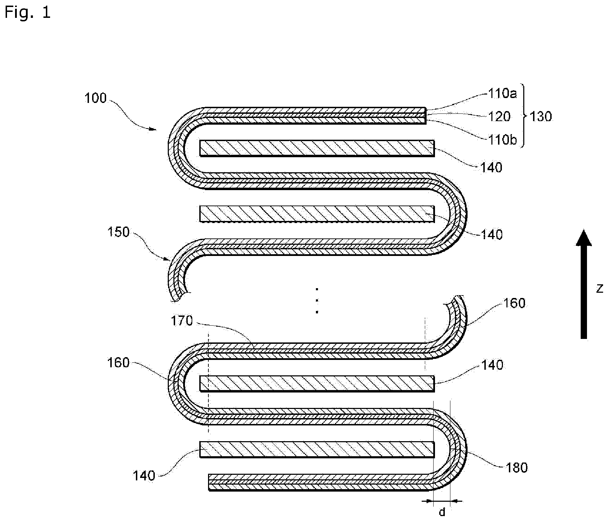

   Fig. 1 is a schematic cross-sectional view of the secondary battery in the first embodiment of the present invention.
[Fig. 2]

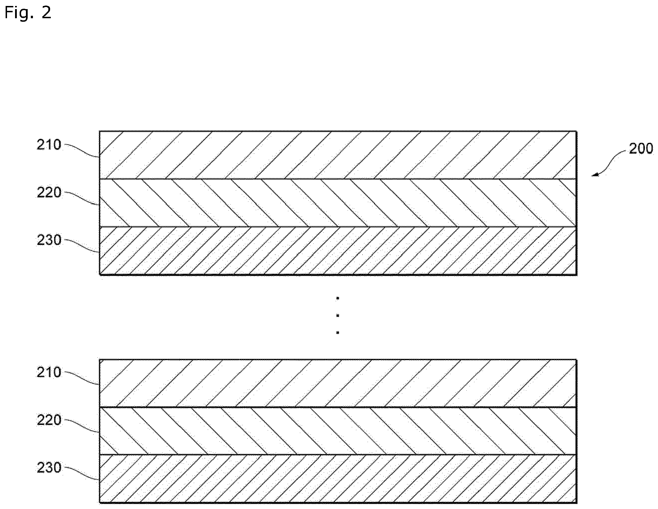

   Fig. 2 is a schematic cross-sectional view of a secondary battery of the prior art.
[Fig. 3]

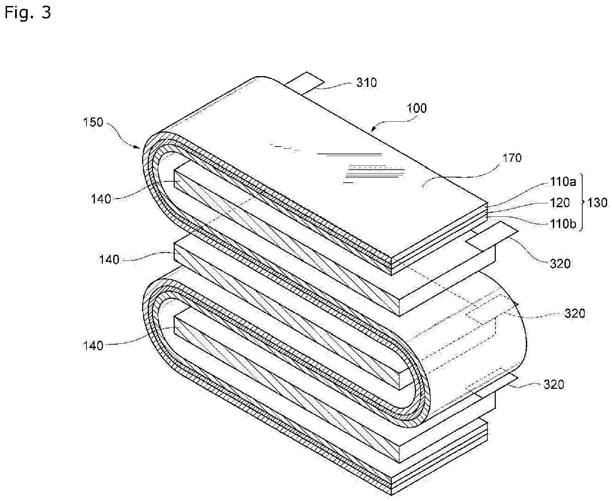

   Fig. 3 is a schematic perspective view of the secondary battery in the first embodiment of the present invention.
[Fig. 4]

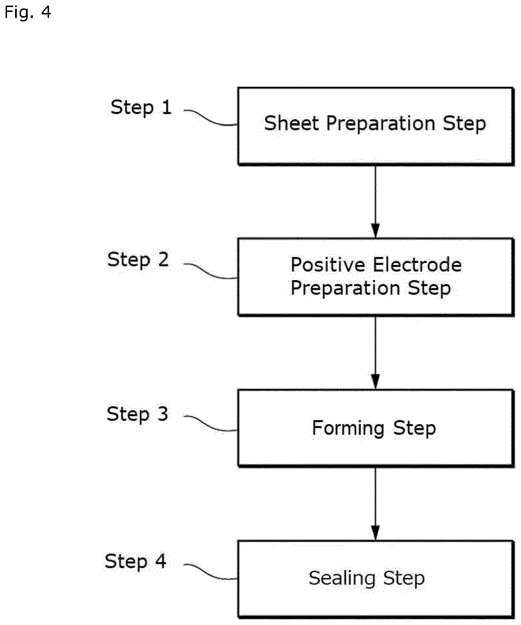

   Fig. 4 is a flowchart showing the production steps for the secondary battery in the first embodiment of the present invention.
[Fig. 5]

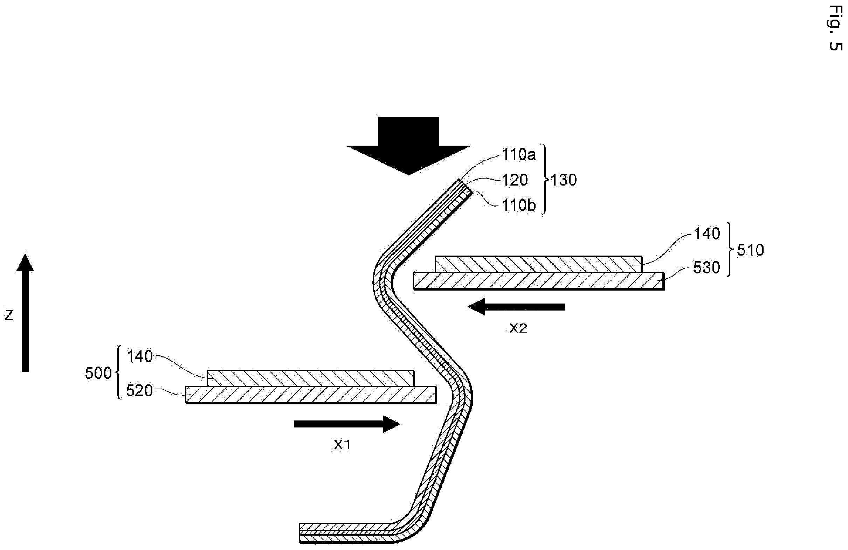

   Fig. 5 is a schematic cross-sectional view of a step in the production steps for the secondary battery in the first embodiment of the present invention.
[Fig. 6]

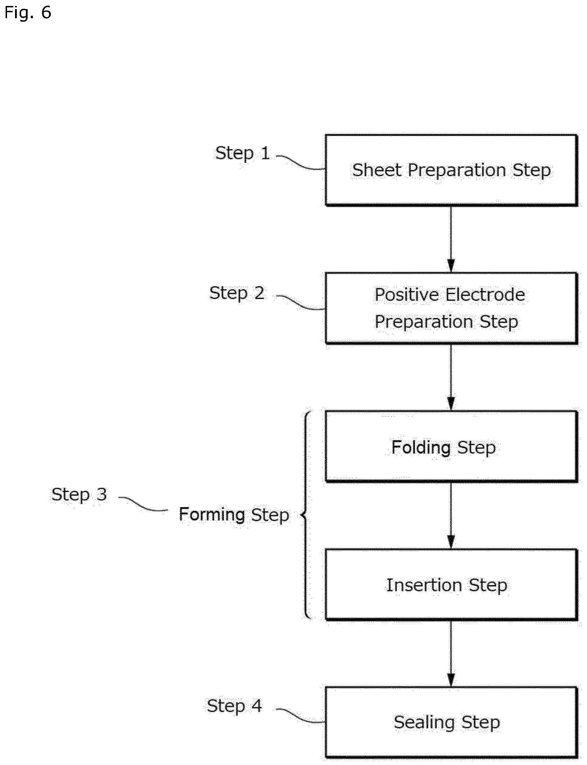

   Fig. 6 is a flowchart showing another method for producing the secondary battery in the first embodiment of the present invention.
[Fig. 7]

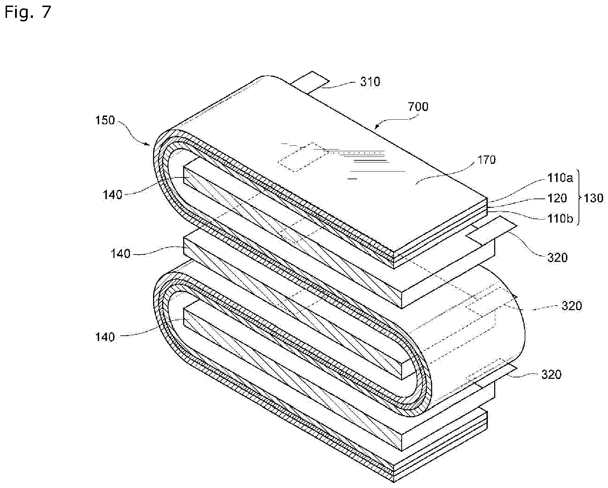

   Fig. 7 is a schematic perspective view of the secondary battery in the second embodiment of the present invention.
[Fig. 8]

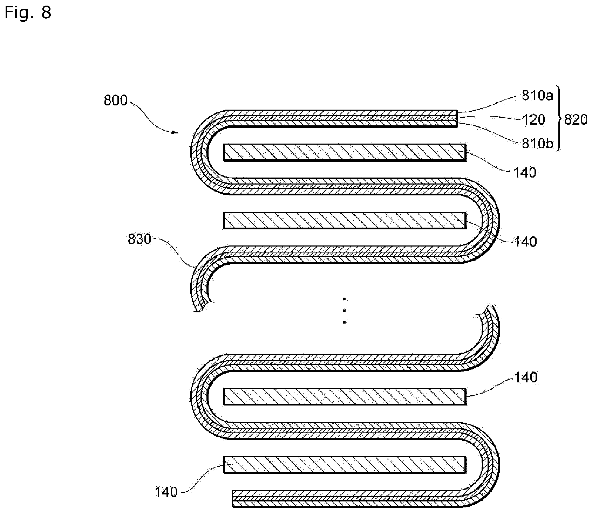

   Fig. 8 is a schematic perspective view of the secondary battery in the third embodiment of the present invention.

### Description of Embodiments

Embodiments of the present invention ("embodiments") will now be described with reference to the drawings when necessary. In the drawings, identical elements are designated by the same reference numbers, and redundant descriptions of these elements has been omitted. Positional relationships such as up, down, left, and right are based on the positional relationship shown in the drawings unless otherwise specified. The dimensional ratios shown in the drawings are not limited to the depicted ratios.

### 1st Embodiment

### Secondary Battery

Fig. 1 is a schematic cross-sectional view of the secondary battery in the first embodiment of the present invention. As shown in Fig. 1, the secondary battery 100 according to the first embodiment comprises: a laminate 150 formed by alternately folding a sheet 130 at an acute angle a plurality of times, the sheet 130 having a negative electrode 120 that is free of a negative electrode active material, and a first separator 110a and a second separator 110b disposed on both surfaces of the negative electrode 120; and a plurality of positive electrodes 140 each disposed in a space between separators facing each other formed by folding the sheet.

### Sheet

The sheet 130 has a negative electrode 120 that is free of a negative electrode active material, and a first separator 110a and a second separator 110b disposed on both surfaces of the negative electrode 120.

### Negative Electrode

The negative electrode 120 is free of a negative electrode active material. It is difficult to increase the energy density of a secondary battery that has a negative electrode including a negative electrode active material because of the presence of the negative electrode active material. However, because the secondary battery 100 in the present embodiment has a negative electrode 120 that is free of a negative electrode active material, such a problem does not arise. In other words, the secondary battery 100 has a high energy density because charging and discharging are performed by depositing metal on the surface of the negative electrode 120 and dissolving the deposited metal.

Here, "negative electrode active material" refers to the material holding a metal ions or metal corresponding to the metal ions ("carrier metal" below), serving as the charge carrier in the battery, in the negative electrode 120, and may also be referred to as the carrier metal host material. Examples of holding mechanisms include, but are not limited to, intercalation, alloying, and occlusion of metallic clusters. The negative electrode active material is typically used to retain lithium metal or lithium ions in the negative electrode 120.

Examples of negative electrode active materials include, but are not limited to, carbon-based substances, metal oxides, metals, and alloys. Carbon-based substances include, but are not limited to, graphene, graphite, hard carbon, mesoporous carbon, carbon nanotubes, and carbon nanohorns. Examples of metal oxides include, but are not limited to, titanium oxide-based compounds, tin oxide-based compounds, and cobalt oxide-based compounds. There are no particular restrictions on the metal or alloy as long as it can be alloyed with the carrier metal. Examples of the metal or alloy include silicon, germanium, tin, lead, aluminum, gallium, and alloys containing them.

There are no particular restrictions on the negative electrode 120 as long as it does not contain a negative electrode active material and can be used as a current collector. Examples of the negative electrode 120 include at least one selected from the group consisting of metals such as Cu, Ni, Ti, Fe and other metals that do not react with Li, alloys of these metals, and stainless steel (SUS). When SUS is used as negative electrode 120, any well-known type of SUS can be used. The negative electrode materials mentioned above may be used alone or in combinations of two or more. A "metal that does not react with Li" refers to a metal that does not react with lithium ions or lithium metal to form an alloy under the operating conditions of the secondary battery 100.

The negative electrode 120 is preferably a lithium-free electrode. Because highly flammable lithium metal does not have to be used in the production process, a secondary battery 100 with even better safety and productivity can be realized. From this standpoint and from the standpoint of improving the stability of the negative electrode 120, the negative electrode 120 preferably consists of at least one selected from the group consisting of Cu, Ni, alloys of these metals, and stainless steel (SUS). From the same standpoints, the negative electrode 120 more preferably consists of Cu, Ni, or alloys these metals, and even more preferably of Cu or Ni.

In the present specification, a "negative electrode free of a negative electrode active material" means the amount of negative electrode active material in the negative electrode is 10% by mass or less relative to the overall mass of the negative electrode. The amount of negative electrode active material in the negative electrode relative to the overall mass of the negative electrode is preferably 5.0% by mass or less, more preferably 1.0% by mass or less, even more preferably 0.1% by mass or less, and still more preferably 0.0% by mass or less. The secondary battery 100 having a negative electrode that is free of a negative electrode active material means an anode-free secondary battery, a zero-anode secondary battery, or an anodeless secondary battery in the general sense of the terms.

The negative electrode 120 preferably has an adhesive layer formed on the surface to improve adhesion between the deposited carrier metal and the negative electrode. In this aspect of the present invention, when a carrier metal, especially lithium metal, is deposited on the negative electrode 120, adhesion between the negative electrode 120 and the deposited metal can be improved. As a result, peeling of the deposited metal from the negative electrode 120 can be suppressed, so that the cycle characteristics of the secondary battery 100 are further improved.

Examples of adhesive layers include metals other than that in the negative electrode, alloys of these metals, and carbonaceous materials. Examples of adhesive layers include, but are not limited to, Au, Ag, Pt, Sb, Pb, In, Sn, Zn, Bi, Al, Ni, Cu, graphene, graphite, hard carbon, mesoporous carbon, carbon nanotubes, and carbon nanohorns. There are no particular restrictions on the thickness of the adhesive layer, but it is preferably 1 nm or more and 300 nm or less, and more preferably 50 nm or more and 150 nm or less. Using the adhesive layer in this aspect of the present invention, even better adhesiveness between the negative electrode 120 and the deposited metal can be achieved. When the adhesive layer corresponds to the negative electrode active material described above, the adhesive layer is 10% by mass or less, preferably 5.0% by mass or less, more preferably 1.0% by mass or less, and still more preferably 0.1% by mass relative to the negative electrode.

The thickness of the negative electrode 120 is preferably 4 µm or more and 20 µm or less, more preferably 5 µm or more and 18 µm or less, and even more preferably 6 µm or more and 15 µm or less. Because the volume occupied by the negative electrode 120 in the secondary battery 100 is reduced in this aspect of the present invention, the energy density of the secondary battery 100 is further improved.

### Separator

The first separator 110a is the component that separates the positive electrode 140 and the negative electrode 120 to prevent short circuiting, while maintaining conductivity of the metal ions serving as the charge carrier between the positive electrode 140 and the negative electrode 120. When an electrolytic solution is used, the first separator 110a also plays a role in retaining the electrolytic solution. There are no particular restrictions on the composition of the first separator 110a as long as it can play such roles. Examples of the first separator 110a include porous polyethylene (PE), polypropylene (PP), and laminated structures thereof.

The first separator 110a may be coated with a separator coating layer. The separator coating layer may cover one or both sides of the first separator 110a. There are no restrictions on the separator coating layer as long as it has ionic conductivity and does not react with the metal ions serving as the charge carriers. The separator coating layer preferably bonds firmly the first separator 110a to the layers adjacent to the first separator 110a. Examples of the separator coating layer include, but are not limited to, one including a binder such as polyvinylidene fluoride (PVDF), styrene-butadiene rubber and carboxymethyl cellulose mixtures (SBR-CMC), polyacrylic acid (PAA), lithium polyacrylate (Li-PAA), polyimide (PI), polyamideimide (PAI), and aramids. The separator coating layer may contain inorganic particles such as silica, alumina, titania, zirconia, magnesium oxide, or magnesium hydroxide particles.

The average thickness of the first separator 110a is preferably 30 µm or less, more preferably 25 µm or less, and even more preferably 20 µm or less. Because the volume occupied by first separator 110a in the secondary battery 100 is reduced in this aspect of the present invention, the energy density of the secondary battery 100 is further improved. The average thickness of the first separator 110a is preferably 3 µm or more, and more preferably 5 µm or more. In this aspect of the present invention, the positive electrode 140 and the negative electrode 120 can be separated more reliably, and short circuiting of the battery can be further suppressed.

The first separator 110b has the configuration described above as the configuration of the first separator 110a. The second separator 110b may be the same as or different from the first separator 110a. Preferably, the second separator 110b is the same as the first separator 110a.

### Laminate

The secondary battery 100 has a zigzag structure (or "serpentine structure") in which the laminate 150 is formed by folding the sheet 130 at an acute angle in a plurality of folded portions 160, and the folded portions 160 and the flat portions 170 are alternately connected in the direction of lamination "Z". Here, "being folded at an acute angle in a plurality of folded portions 160" means that the angle formed by the two flat portions 170 connected by a folded portion 160 is an acute angle. The laminate 150 preferably has a folded portion 160 in which the angle formed by two flat portions 170 connected by the folded portion 160 is about 0 degrees. In other words, the laminate 150 is preferably folded so that adjacent flat portions 170 are substantially parallel to each other. In this aspect of the present invention, the number of layers in the laminate 150 can be further increased.

The number of layers in a laminate 150 means the number of times the sheet 130 is folded, which corresponds to the number of the folded portions 160. For example, a laminate 150 formed by folding a sheet 130 three times has four flat portions 170 and three folded portions 160, and the number of layers is three.

At the folded portions 160 of the laminate 150, the angle formed by two flat portions 170 connected by a folded portion 160 may be 0 degrees or more, 1 degree or more, 3 degrees or more, 5 degrees or more, 10 degrees or more, or 15 degrees or more. At the folded portions 160 of the laminate 150, the angle formed by two flat portions 170 connected by a folded portion 160 may be 40 degrees or less, 30 degrees or less, 20 degrees or less, or 18 degrees or less.

In the secondary battery 100, the number of layers is two or more, that is, the battery includes a laminate having three flat portions 170 and two folded portions 160. The number of layers in the secondary battery 100 is preferably 3 or more, more preferably 5 or more, and even more preferably 10 or more. When the number of layers in the secondary battery 100 is within this range, the capacity of the secondary battery 100 is further improved. Although there is no particular restriction on the upper limit on the number of layers in the secondary battery 100, the number of layers may be 50 or less, 40 or less, or 30 or less. When the number of layers in the secondary battery 100 is within this range, productivity is further improved.

Fig. 2 is a schematic cross-sectional view of a secondary battery of the prior art. As shown in Fig. 2, the secondary battery 200 of the prior art has a structure in which a plurality of layers with a positive electrode 210, a separator 220, and a negative electrode 230 with a negative electrode active material are laminated. This secondary battery 200 of the prior art can be automatically laminated using an automatic laminating device as described below, but has a low energy density due to the presence of the negative electrode active material in the negative electrodes 230.

The following is the process for automatically laminating a secondary battery 200 of the prior art using an automatic laminating device. First, a plurality of positive electrodes 210, separators 220, and negative electrodes 230 are prepared, and each type of the components is set at a predetermined position in the automatic laminating device. Next, the automatic laminating device picks up one of the positive electrodes 210 set at the predetermined position. Similarly, the automatic laminating device picks up one of the separators 220 and negative electrodes 230 set at their predetermined positions, and laminates these components in order to obtain a structure in which a positive electrode 210, a separator 220, and a negative electrode 230 have been laminated. This laminating step is repeated to obtain the structure shown in Fig. 2, in which a positive electrode 210, a separator 220, and a negative electrode 230 are laminated in multiple layers.

When a secondary battery is produced using a negative electrode free of a negative electrode active material instead of the negative electrode 230 with a negative electrode active material in order to improve the energy density, and a laminated structure with a positive electrode, a separator, and the negative electrode is formed by automatic lamination in the same manner as described above, the negative electrode free of a negative electrode active material is very thin and difficult to handle, and thereby the laminated negative electrode tends to become wrinkled. When the negative electrode becomes wrinkled, the carrier metal deposited on the negative electrode adheres insufficiently to the negative electrode. When the secondary battery is used, the carrier metal deposited on the negative electrode tends to peel off from the negative electrode. As a result, the secondary battery has poor cycle characteristics.

In the secondary battery 100 in the first embodiment shown in Fig. 1, the negative electrode 120, which is very thin and difficult to handle, is not laminated as a single unit. Instead, the laminate 150 is provided consisting of the sheet 130 that has the negative electrode 120 as well as the first separator 110a and the second separator 110b disposed on both sides of the negative electrode 120. Because the sheet 130 includes the negative electrode 120, the first separator 110a, and the second separator 110b, the average thickness of the sheet is greater than that of the negative electrode 120 and the sheet is easier to handle. Also, because the negative electrode 120 is interposed between the first separator 110a and the second separator 110b and physical pressure is applied from both sides, wrinkles are less likely to occur. The secondary battery 100 can thus be formed using an automatic laminating device while suppressing wrinkling of the negative electrode 120, resulting in excellent cycle characteristics and high productivity.

### Positive Electrode

In the secondary battery 100, as shown in Fig. 1, the positive electrode 140 is arranged in each space formed by folding the sheet 130. More specifically, positive electrodes 140 are each disposed between flat portions 170 that are adjacent to each other. A positive electrode 140 arranged between a flat portion 170 (first flat portion 170) and a flat portion 170 (second flat portion 170) adjacent to the first flat portion 170 in the direction of lamination Z faces the first separator 110a in the first flat portion 170 on one side and the first separator 110a in the second flat portion 170 on the other side. A positive electrode 140 arranged between the first flat portion 170 and a flat portion 170 (third flat portion 170) adjacent to the first flat portion 170 in the direction opposite the direction of lamination Z faces the second separator 110b in the first flat portion 170 on one side and the second separator 110b in the third flat portion 170 on the other side.

Because a positive electrode 140 is arranged between flat portions 170 adjacent to each other as described above, both surfaces of the positive electrode 140 face the negative electrode 120 via the first separator 110a or the second separator 110b. The secondary battery 100 can thus include a plurality of positive electrodes 140. As a result, the capacity of the secondary battery 100 is improved.

In Fig. 1, each positive electrode 140 is arranged so as to be separated from the end (folded end portion) 180 of a folded portions 160 in the laminated body 150 preferably within the range of 0.01 mm or more and 5.00 mm or less. In other words, the distance "d" between the positive electrode 140 and the folded end portion 180 is preferably 0.01 mm or more and 5.00 mm or less. When the distance d is 0.01 mm or more, the time required to position the positive electrodes 140 is shortened, and the productivity of the secondary battery 100 is further improved. When the distance d is 5.00 mm or less, the area of the positive electrodes 140 facing the negative electrode 120 is increased, and the energy density and capacity of the secondary battery 100 are further improved. From the same standpoint, the distance d is more preferably 0.05 mm or more and 4.00 mm or less, and even more preferably 0.10 mm or more and 3.00 mm or less.

The distance d between a positive electrode 140 and a folded end portion 180 can be measured in the following way. First, the secondary battery 100 is cut along a plane parallel to the direction of lamination Z and perpendicular to at least one folded portion 160. The cut surface is observed with the naked eye or under an optical microscope or an electron microscope, and the distance d between the positive electrode 140 and the folded end portion 180 is measured for at least two or more positive electrodes 140. The arithmetic mean of the measurement results is then determined, and this is used as the distance d between the positive electrodes 140 and the folded end portions 180. A folded end portion 180 is the point at which the distance from the positive electrode 140 is the longest along a folded portion 160 on the cut surface of the secondary battery 100. In other words, if the distance between a positive electrode 140 and any point along a folded portion 160 on the cut surface of the secondary battery 100 is d', the point along the folded portion 160 at which d' is greatest is the folded end portion 180.

Positive electrode 140 is not particularly limited as long as it is a positive electrode commonly used in a secondary battery. Positive electrode 110 can be selected depending on the intended use of the secondary battery and the type of carrier metal being used. From the standpoint of increasing the stability and output voltage of the secondary battery, the positive electrode 140 preferably contains a positive electrode active material.

In the present specification, the "positive electrode active material" refers to the material holding carrier metal in the positive electrode 140, and this serves as a host material for the carrier metal. In the present specification, the positive electrode active material is typically a material holding lithium ions in the positive electrode 140.

Examples of positive electrode active materials include, but are not limited to, metal oxides and metal phosphates. Examples of metal oxides include, but are not limited to, cobalt oxide-based compounds, manganese oxide-based compounds, and nickel oxide-based compounds. Examples of metal phosphates include, but are not limited to, iron phosphate-based compounds and cobalt phosphate-based compounds. Examples of metal phosphates include, but are not limited to, iron phosphate-based compounds and cobalt phosphate-based compounds. When the carrier metal is a lithium ion, typical examples of positive electrode active materials include LiCoO₂, LiNiₓCo_{y}Mn_{z}O (x + y + z = 1), LiNiₓMn_{y}O (x + y = 1), LiNiOz, LiMn₂O₄, LiFePO₄, LiCoPO, LiFeOF, LiNiOF, and TiS₂. The positive electrode active materials mentioned above can be used alone or in combinations of two or more.

The positive electrode 140 may contain components other than the positive electrode active material. Examples of these components include, but are not limited to, conductive aids, binders, solid polymer electrolytes, and inorganic solid electrolytes commonly used in the art.

Examples of conductive aids that can be used in the positive electrode 140 include carbon black, single-wall carbon nanotubes (SW-CNT), multi-wall carbon nanotubes (MW-CNT), carbon nanofibers, and acetylene black. Examples of binders include polyvinylidene fluoride, polytetrafluoroethylene, styrene butadiene rubber, acrylic resins, and polyimide resins.

The amount of positive electrode active material in the positive electrode 140 may be, for example, 50% by mass or more and 100% by mass or less relative to the overall mass of the positive electrode 140. The amount of conductive aid in the positive electrode 140 may be, for example, 0.5% by mass or more and 30% by mass or less relative to the overall mass of the positive electrode 140. The amount of binder in the positive electrode 140 may be, for example, 0.5% by mass or more and 30% by mass or less relative to the overall mass of the positive electrode 140. The total amount of the solid polymer electrolyte and the inorganic solid electrolyte may be 0.5% by mass or less than 30% by mass relative to the overall mass of the positive electrode 140.

### Electrolytic Solution

The secondary battery 100 may contain an electrolytic solution. The electrolytic solution may be impregnated in the first separator 110a and/or the second separator 110b, or the laminate 150 and the electrolytic solution may be sealed to obtain a secondary battery 100. The electrolytic solution includes an electrolyte and a solvent, and is ionically conductive solution that acts as a conductive path for lithium ions. When an electrolytic solution is used, the internal resistance of the secondary battery 100 can be lowered, and the energy density and cycle characteristics improve.

There are no particular restrictions on the electrolyte that is used. Examples of the electrolyte include salts of Li, Na, K, Ca, and Mg. A lithium salt is preferably used as the electrolyte. Examples of lithium salts that can be used include, but are not limited to, LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNO₃, and Li₂SO₄. From the standpoint of further improving the energy density, capacity, and cycle characteristics of the secondary battery 100, used of LiN(SO₂F)₂ as the lithium salt is preferred. These lithium salts can be used alone or in combinations of two or more.

Examples of solvents include, but are not limited to, dimethyl ether, diethylene glycol dimethyl ether, triethylene glycol dimethyl ether, acetonitrile, dimethyl carbonate, diethyl carbonate, ethylmethyl carbonate, ethylene carbonate, propylene carbonate, chloroethylene carbonate, fluoroethylene carbonate, difluoroethylene carbonate, trifluoromethylpropylene carbonate, methylacetate, ethylacetate, propylacetate, methylpropionate, ethylpropionate, nonafluorobutylmethyl ether, nonafluorobutylethyl ether, tetrafluoroethyltetrafluoropropyl ether, triethyl phosphate, and triethyl phosphate. These solvents can be used alone or in combinations of two or more.

### Positive Electrode Terminal and Negative Electrode Terminal

Fig. 3 is a schematic perspective view of the secondary battery in the first embodiment of the present invention. As shown in Fig. 3, the secondary battery 100 in the first embodiment includes at least one negative electrode terminal 310 in a flat portion 170 of the laminate 150. The secondary battery 100 also includes a positive electrode terminal 320 for each positive electrode. The negative electrode terminal 310 and the positive electrode terminals 320 are each connected to an external circuit. There are no particular restrictions on the materials used in the negative electrode terminal 310 and the positive electrode terminals 320 as long as they are conductive. Examples of the materials include Al and Ni.

### Use of Secondary Battery

The secondary battery 100 is charged and discharged by connecting the negative electrode terminal 310 to one end of an external circuit and the positive electrode terminals 320 to the other end of the external circuit. When there is a plurality of negative electrode terminals 310, all of the negative electrode terminals 310 are connected to the external circuit so as to have the same potential. Similarly, the positive electrode terminals 320 are connected to an external circuit so that all of the positive electrode terminals 320 have the same potential.

The secondary battery 100 is charged by applying voltage between the positive electrode terminals 320 and the negative electrode terminal 310 so that a current flows from the negative electrode terminal 310 through the external circuit to the positive electrode terminals 320. When the secondary battery 100 is charged, carrier metal is deposited on the interface between the negative electrode 120 and the first separator 110a and the interface between the negative electrode 120 and the second separator 110b. The deposited carrier metal is typically lithium metal. Because the negative electrode 120 in the secondary battery 100 is kept from becoming wrinkled, the deposited carrier metal has excellent adhesion to the negative electrode 120. As a result, the carrier metal deposited on the negative electrode 120 is less likely to peel off from the negative electrode, and the secondary battery 100 has excellent cycle characteristics.

In the secondary battery 100, a solid electrolyte interface layer (SEI layer) may be formed at the interface between the negative electrode 120 and the first separator 110a and/or at the interface between the negative electrode 120 and the second separator 110b during initial charging. There are no particular restrictions on the SEI layer that is formed, but it may contain, for example, an inorganic material of carrier metal and an organic material of carrier metal. It may include a lithium-containing inorganic compound and/or a lithium-containing organic compound. A typical average thickness for the SEI layer is 1 nm or more and 10 µm or less.

When an SEI layer is formed in the secondary battery 100, the carrier metal that deposits during charging of the secondary battery 100 may deposit at the interface between the negative electrode 120 and the SEI layer, at the interface between the SEI layer and the first separator 110a, and at the interface between the SEI layer and the second separator 110b.

When the positive electrode terminal 320 and the negative electrode terminal 310 of the charged secondary battery 100 are connected, the secondary battery 100 is discharged. The carrier metal deposited on at least one of the interface between the negative electrode 120 and the SEI layer, the interface between the SEI layer and the first separator 110a, and the interface between the SEI layer and the second separator 110b then dissolves.

### Secondary Battery Production Method

The method for producing a secondary battery of the present embodiment comprises the steps of: preparing a sheet having a negative electrode free of a negative electrode active material and separators disposed on both sides of the negative electrode; and forming an article including a laminate formed by alternately folding the sheet multiple times at an acute angle and a plurality of positive electrodes each disposed in a space between separators facing each other formed by folding the sheet. Fig. 4 is a flowchart showing the production steps for the secondary battery 100 in the first embodiment of the present invention shown in Fig. 1. Each step will be described below.

### Sheet Preparation Step

In the method for manufacturing a secondary battery of the present embodiment, first, a sheet having a negative electrode free of a negative electrode active material and separators disposed on both sides of the negative electrode is prepared (sheet preparation step, step 1). There are no particular restrictions on the sheet preparation step as long as it is a step that arranges the separators on both sides of the negative electrode without causing wrinkles on the negative electrode. For example, the roll-to-roll method can be used.

The roll-to-roll method may be performed as follows. A roll of a sheet including a material constituting the negative electrode 120 (the "negative electrode sheet" below), a roll of a sheet including a material constituting the first separator 110a (the "first separator sheet" below), and a roll of a sheet including a material constituting the second separator 110b (the "second separator sheet" below) are prepared. The rolls are installed in predetermined devices, the sheets of the rolls are unrolled, and the negative electrode sheet is interposed between the first separator sheet and the second separator sheet while applying pressure in the thickness direction of the sheet to form a composite sheet in which the first separator sheet and the second separator sheet are arranged on both sides of the negative electrode sheet. The resulting sheet can then be wound into a roll and supplied to the next step.

When the roll-to-roll method is used in the sheet preparation process, a sheet in which the first separator sheet and the second separator sheet are arranged on both sides of the negative electrode sheet can be formed while stretching the negative electrode sheet in the in-plane direction, and this prevents wrinkling on the negative electrode sheet. Also, because the sheet is wound into a roll, it can be easily supplied to the next step in the process, and the productivity is further improved.

The thickness of the negative electrode sheet may be the same as that of the negative electrode 120 or thicker than that of the negative electrode 120. When the negative electrode sheet is thicker than the negative electrode 120, the negative electrode sheet may be made thinner by rolling the negative electrode sheet before the negative electrode sheet is interposed between the first separator sheet and the second separator sheet.

The sheet preparation step may include washing and drying steps before and/or after forming the sheet with a negative electrode and separators disposed on both sides of the negative electrode. Examples of a cleaning step include a step of cleaning the negative electrode sheet with a solvent containing sulfamic acid, followed by ultrasonic cleaning with ethanol.

### Positive Electrode Preparation Step

Next, positive electrodes 140 are prepared as shown in Fig. 4 (positive electrode preparation step, step 2). There are no particular restrictions on the method used to produce the positive electrodes 140 as long as the positive electrodes 140 described above can be obtained. For example, a positive electrode mixture containing a positive electrode active material, a well-known conductive aid, and a well-known binder is applied to one side of metal foil (for example, Al foil) with a thickness of 5 µm or more and 1 mm or less, and then it is subject to press-molding to obtain the positive electrodes. Alternatively, a commercially available positive electrode for secondary batteries may be used.

### Forming Step

Next, as shown in Fig. 4, an article is formed that includes a laminate formed by alternately folding the sheet multiple times at an acute angle and a plurality of positive electrodes each disposed in a space between separators facing each other formed by folding the sheet (forming step, step 3).

Because an article is formed in the forming step that includes a laminate formed using a sheet of the appropriate thickness and mechanical strength, and positive electrodes arranged in the spaces in the laminate, wrinkles are less likely to occur in the negative electrode when an automatic laminating device is used in the forming process. In other words, the article can be formed automatically without wrinkles occurring in the negative electrode. As a result, the secondary battery production method in the present embodiment can manufacture a secondary battery having excellent cycle characteristics with high productivity.

Fig. 5 shows one aspect of the forming step. In the forming step of the present embodiment, first, the sheet 130 is pressed from the direction opposite the direction of lamination Z for the laminate to fold the sheet 130 while a first flat plate 500 is pressed against the sheet 130 in a first direction "X1" perpendicular to the direction of lamination "Z" for the laminate, and a second flat plate 510 is pressed against the sheet 130 in a second direction "X2" opposite the first direction. Here, the first flat plate 500 includes a positive electrode 140 and a first substrate 520 integrated with the positive electrode 140, and the second flat plate 510 includes a positive electrode 140 and a second substrate 530 integrated with the positive electrode 140. The first substrate 520 and the second substrate 530 are then removed. In this aspect of the present invention, formation of the laminate 150 in Fig. 1 and insertion of the positive electrodes 140 can be performed simultaneously, further improving productivity.

When folding the sheet 130 in the manner described above, tension is preferably applied in the longitudinal direction of the sheet 130 by fixing one end of the sheet 130 in the longitudinal direction and pulling on the other end. In this aspect of the present invention, because the sheet 130 can be kept from sagging, the negative electrode 120 can be kept even more from becoming wrinkled. The tension applied in the longitudinal direction of the sheet 130 can be adjusted according to the thickness of the sheet 130. The amount of tension can be, for example, 0.1 kgf or more and 10.0 kgf or less.

There are no particular restrictions on the method used to integrate the positive electrode 140 and the first substrate 520 with the first flat plate 500. Examples of the method include a method in which the positive electrode 140 is put on the first substrate 520 and a method in which the positive electrode 140 is suctioned by the first substrate 520 connected to a suction device. When the positive electrode 140 is suctioned by the first substrate 520 connected to a suction device, suctioning of the positive electrode 140 is to be released before the first substrate 520 is removed.

In another embodiment shown in Fig. 6, the forming step may include a folding step of folding the sheet 130 in Fig. 1 to form the laminate 150 in Fig. 1, and a insertion step of inserting the positive electrodes 140 in Fig. 1 into each space formed by folding the sheet 130 in Fig. 1.

In the folding step, the sheet 130 is pressed from the direction opposite the direction of lamination for the laminate to fold the sheet 130 while the first flat plate is pressed against the sheet 130 in a first direction perpendicular to the direction of lamination for the laminate and the second flat plate is pressed against the sheet 130 in a second direction opposite the first direction, and then the first flat plate and second flat plate are removed. This folding step produces the laminate 150 shown in Fig. 1.

In the insertion step, a positive electrode 140 is inserted into each space in the laminate 150 in Fig. 1 formed in the folding step. In other words, in the insertion step, positive electrodes 140 are inserted between flat portions 170 that are adjacent to each other.

### Sealing Step

Next, as shown in Fig. 4 and Fig. 6, the article with a plurality of positive electrodes 140 arranged in the spaces of the laminate 150 is sealed inside a sealed container to obtain a sealed object, which is used as the secondary battery 100 (sealing step, step 4). In the sealing step, the electrolytic solution may be encapsulated to the sealed container. By encapsulating the electrolytic solution, internal resistance in the secondary battery 100 is further reduced, and the energy density, capacity, and cycle characteristics of the secondary battery 100 are further improved.

There are no particular restrictions on the sealed container used in the sealing step. Examples of the sealed container include laminated film.

### 2nd Embodiment

### Secondary Battery

Fig. 7 is a schematic perspective view of the secondary battery in the second embodiment of the present invention. As shown in Fig. 7, the secondary battery 700 in the second embodiment includes a negative electrode terminal 310 for each flat portion 170 of the laminate 150. The secondary battery 700 also includes a positive electrode terminal 320 for each positive electrode. In the secondary battery 700, a plurality of negative electrode terminals 310 are connected to an external circuit so that all of the negative electrode terminals 310 have the same potential.

In this aspect of the present invention, because the negative electrode 120 has a plurality of negative electrode terminals 310 and the negative electrode terminals 310 are connected so as to have the same potential, the negative electrode 120 is easier to keep at the same potential, and the internal resistance in the secondary battery 700 is further reduced. As a result, the energy density, capacity, and cycle characteristics of the secondary battery 700 are further improved.

The secondary battery 700 has the same configurations as the secondary battery 100 in the first embodiment except for the configurations described above, and has the same effects.

### 3rd Embodiment

### Secondary Battery

Fig. 8 is a schematic perspective view of the secondary battery in the third embodiment of the present invention. As shown in Fig. 8, the secondary battery 800 in the third embodiment comprises: a laminate 830 formed by alternately folding a sheet 820 at an acute angle a plurality of times, the sheet 820 having a negative electrode 120 that is free of a negative electrode active material, and a first solid electrolyte 810a and a second solid electrolyte 810b disposed on both surfaces of the negative electrode 120; and a plurality of positive electrodes 140 each disposed in a space between solid electrolytes facing each other formed by folding the sheet. In other words, in the secondary battery 800, the first separator 110a and the second separator 110b in the secondary battery 100 of the first embodiment have been changed to a first solid electrolyte 810a and a second solid electrolyte 810b.

### Solid Electrolyte

In general, in a battery containing an electrolytic solution, the physical pressure applied by the electrolytic solution to the surface of the negative electrode tends to vary locally due to fluctuations in the liquid. Because the secondary battery 800 includes a first solid electrolyte 810a and a second solid electrolyte 810b, the pressure applied to the surface of the negative electrode 120 from the first solid electrolyte 810a and the second solid electrolyte 810b is more uniform, and the shape of the carrier metal deposited on the surface of the negative electrode 120 is more uniform. In other words, because in this aspect of the present invention, the carrier metal deposited on the surface of the negative electrode 120 is kept from growing in the form of dendrites, the cycle characteristics of the secondary battery 800 are further improved.

There are no particular restrictions on the first solid electrolyte 810a as long as it can be commonly used in solid-state secondary batteries. A material for the first solid electrolyte 810a can be selected depending on the intended application of the secondary battery 800 and the type of carrier metal used. Preferably, the first solid electrolyte 810a has ionic conductivity and no electron conductivity. When the first solid electrolyte 810a has ionic conductivity and no electron conductivity, the internal resistance in the secondary battery 800 is further reduced and short-circuiting inside the secondary battery 800 is further suppressed. As a result, the secondary battery 800 has a higher energy density and even more excellent cycle characteristics.

There are no particular restrictions on the first solid electrolyte 810a. Examples of the first solid electrolyte 810a include, for example, a solid electrolyte including a resin and lithium salt. Examples of the resins include, but are not limited to, resins having an ethylene oxide unit in a main chain and/or a side chain, acrylic resins, vinyl resins, ester resins, nylon resins, polysiloxanes, polyphosphazene, polyvinylidene fluoride, polymethyl methacrylate, polyamides, polyimides, aramids, polylactic acid, polyethylenes, polystyrenes, polyurethanes, polypropylenes, polybutylenes, polyacetals, polysulfones, and polytetrafluoroethylene. These resins can be used alone or in combinations of two or more.

There are no particular restrictions on the salt used in the first solid electrolyte 810a. Examples of the salts include salts of Li, Na, K, Ca, and Mg. Examples of lithium salts include, but are not limited to, LiI, LiCl, LiBr, LiF, LiBF₄, LiPF₆, LiAsF₆, LiSO₃CF₃, LiN(SO₂F)₂, LiN(SO₂CF₃)₂, LiN(SO₂CF₃CF₃)₂, LiB(O₂C₂H₄)₂, LiB(O₂C₂H₄)F₂, LiB(OCOCF₃)₄, LiNO₃, and Li₂SO₄. These lithium salts can be used alone or in combinations of two or more.

Generally, the ratio of resin to lithium salt in the solid electrolyte is determined by the ratio of oxygen atoms in the resin to lithium atoms in the lithium salt ([Li]/[O]). In the first solid electrolyte 810a, the ([Li]/[O]) ratio is preferably 0.02 or more and 0.20 or less, more preferably 0.03 or more and 0.15 or less, and even more preferably 0.04 or more and 0.12 or less.

The first solid electrolyte 810a may contain components other than the resins and lithium salts mentioned above. Examples of the components include, but are not limited to, solvents.

There are no particular restrictions on the solvent. Examples of the solvent include the solvents used in the electrolytic solution of the secondary battery 100 mentioned above.

The average thickness of first solid electrolyte 810a is preferably 20 µm or less, more preferably 18 µm or less, and even more preferably 15 µm or less. In this aspect of the present invention, because the volume occupied by the first solid electrolyte 810a in the secondary battery 800 is reduced, the energy density of the secondary battery 800 is further improved. The average thickness of first solid electrolyte 810a is also preferably 5 µm or more, more preferably 7 µm or more, and even more preferably 10 µm or more. In this aspect of the present invention, the positive electrodes 140 and the negative electrode 120 can be separated more reliably, and short circuiting of the battery can be further suppressed.

The second solid electrolyte 810b may be the same as or different from the first solid electrolyte 810a as long as the first solid electrolyte 810a has the configurations described above. The preferred aspects of the second solid electrolyte 810b are the same as those of the first solid electrolyte 810a.

In the present specification, "solid electrolyte" includes gel electrolytes. Examples of the gel electrolytes include, but are not limited to, those containing a polymer, an organic solvent, and a lithium salt. Examples of the polymers in the gel electrolyte include, but are not limited to, copolymers of polyethylene and/or polyethylene oxide, polyvinylidene fluoride, and copolymers of polyvinylidene fluoride and hexafluoropropylene.

### Secondary Battery Production Method

The secondary battery 800 can be produced in the same manner as the method for producing the secondary battery 100 of the first embodiment described above, except that solid electrolytes are used instead of the separators.

There are no particular restrictions on a method used to produce the first solid electrolyte 810a and the second solid electrolyte 810b, as long as the method produces the solid electrolyte 810a described above. For example, the following method may be used. A resin and salt commonly used in a solid polymer electrolyte (such as the resins and salts in the solid electrolyte 810 described above) are dissolved in an organic solvent. The resulting solution is then cast on a forming substrate to a predetermined thickness to obtain a first solid electrolyte 810a and a second solid electrolyte 810b. Here, the mixing ratio of the resin and the lithium salt may be determined based on the ratio ([Li]/[O]) of the oxygen atoms in the resin and the lithium atoms in the lithium salt, as described above. This ratio ([Li]/[O]) may be, for example, 0.02 or more and 0.20 or less. There are no particular restrictions on the organic solvent that is used. Examples of the organic solvent include, for example, acetonitrile. There are no particular restrictions on the forming substrate that is used. Examples of the forming substrate, for example, a PET film or a glass substrate.

The embodiments described above are provided merely to explain the present invention and are not intended to limit the present invention to the embodiments. Various modifications are possible without departing from the scope and spirit of the present invention.

For example, the secondary battery in the embodiments may be a solid-state secondary battery. The secondary battery of the present embodiment may also be a lithium secondary battery in which charging and discharging are performed by depositing lithium metal on the surface of the negative electrode and dissolving the deposited lithium. From the standpoint of effectively and reliably realizing the effect of the present embodiment, the secondary battery in the embodiments is preferably a lithium secondary battery in which charging and discharging are performed by depositing lithium metal on the surface of the negative electrode and dissolving the deposited lithium.

In the secondary battery of the embodiments, there may be no lithium foil formed between the separators or the solid electrolytes and the negative electrode prior to the initial charge. When lithium foil is not formed between the separators or solid electrolytes and the negative electrode in the secondary battery of the embodiments prior to the initial charge, highly flammable lithium metal are not used during production, and the secondary battery with better safety and higher productivity is realized.

The secondary battery in the embodiments may have a current collector arranged so as to be in contact with the negative electrode or the positive electrodes. There are no particular restrictions on the current collector. Examples of the current collector include a current collector consisting of the material which can be used as the negative electrode. When the secondary battery does not have a current collector, the negative electrode or the positive electrodes themselves act as current collector(s).

In the present specification, "the energy density is high" and "high energy density" means the capacity is high relative to the total volume or total mass of the battery. This is preferably 800 Wh/L or more or 350 Wh/kg or more, more preferably 900 Wh/L or more or 400 Wh/kg or more, and even more preferably 1000 Wh/L or more or 450 Wh/kg or more.

In the present specification, "excellent cycle characteristics" means that the rate of decline in battery capacity is low after the number of times of charging and discharging cycles that can be expected during normal use. In other words, when comparing the initial capacity to the capacity after the number of times of charging and discharging cycles that can be expected during normal use, the capacity after the charging and discharging cycles has not declined much relative to the initial capacity. Here, "the number of times that can be expected during normal use" can be, for example, 50 times, 100 times, 500 times, 1000 times, 5000 times, or 10000 times, depending on the application for the secondary battery. The "capacity after the charging and discharging cycles not declining much relative to the initial capacity" depends on the application for the secondary battery. For example, it may mean that the capacity after the charge/discharge cycles is 65% or more, 70% or more, 75% or more, 80% or more, 85% or more, or 90% or more of the initial capacity.

### Examples

The following is a more detailed description of the present invention with reference to examples and comparative examples. The present invention is not limited in any way by these examples.

### Example 1

A sheet in which both sides of an 8 µm-thick Cu substrate were coated with 100 nm Sn foil was prepared as the negative electrode sheet. A negative electrode terminal was attached to the negative electrode sheet by joining a Ni terminal using ultrasonic welding. The first and second separator sheets were prepared by coating the surface of a separator (thickness: 15 µm) with a mixture of polyvinylidene fluoride (PVDF) and Al₂O₃. By interposing the negative electrode sheet between the first and second separator sheets and pressing the sheets together in the thickness direction, a sheet was obtained in which the separators were arranged on both sides of the negative electrode.

A mixture of 96 parts by mass LiNi_{0.8}Co_{0.15}Al_{0.05}O₂ positive electrode active material, 2 parts by mass carbon black conductive agent, and 2 parts by mass polyvinylidene fluoride (PVDF) binder in a N-methyl-pyrrolidone (NMP) solvent was applied to both sides of 12 µm-thick Al foil, and then it is subject to press-molding. The resulting molded body was punched out to obtain a positive electrode of a predetermined size. A positive electrode terminal was attached in advance to the Al foil by joining an Al terminal using ultrasonic welding. When the positive electrode was charged to 4.2 V (vs. a lithium metal counter electrode) and then discharged to 3.0 V (vs. a lithium metal counter electrode) with a current equivalent to 0.1 C, the discharge capacity of the positive electrode was found to be 4.8 mAh/cm².

Next, the sheet with the separators arranged on both sides of the negative electrode was placed in an automatic laminating device, and the sheet was automatically folded multiple times at acute angles to form a laminate. In this step, the automatic laminating device automatically folded the sheet alternately at acute angles multiple times by repeated steps of pressing the sheet from a direction opposite the direction of lamination for the laminate to fold the sheet while pushing a first flat plate against the sheet from a first direction perpendicular to the direction of lamination for the laminate and pushing a second flat plate against the sheet from a second direction opposite the first direction; and removing the first flat plate and the second flat plate. In this step, the sheet was folded while tension was being applied in the long axis direction. The number of layers in the laminate was adjusted so that the initial capacity of the secondary battery was 10 Ah.

Next, the positive electrode prepared in the manner described above was inserted into each space in the laminate prepared in the manner described above. At this time, the positive electrodes were inserted so that the distance between each of the positive electrodes and each of the folded ends of the laminate was 0.01 mm or more and 5.00 mm or less. In this way, a structure was obtained in which each of the positive electrodes 140 is arranged in each space in the laminate 150 as shown in Fig. 1. This was inserted into a laminated outer casing.

A 4M LiN(SO₂F)₂ ("LFSI" below) solution in dimethoxyethane ("DME" below) was injected as an electrolytic solution into the outer casing. The outer casing was then sealed to obtain a secondary battery.

### Comparative Example 1

An electrode obtained by coating both sides of an 8 µm-thick Cu substrate with 100 nm Sn foil was washed with a solvent containing sulfamic acid, punched out to a predetermined size, washed ultrasonically with ethanol, and dried to obtain a negative electrode. A negative electrode terminal was attached to the negative electrode by joining a Ni electrode by ultrasonic welding. Also, a positive electrode with a positive electrode terminal attached was produced in the same manner as in Example 1. The separators were prepared by coating the surface of a separator (thickness: 15 µm) with a mixture of polyvinylidene fluoride (PVDF) and Al₂O₃.

Next, the positive electrode, separator, and negative electrode described above were manually laminated one by one in this order. The resulting laminate was inserted into a laminated outer casing in the same manner as in Example 1 to obtain a secondary battery. The number of layers in the laminate was adjusted so that the initial capacity of the secondary battery was 10 Ah.

### Comparative Example 2

A negative electrode, a positive electrode, and a separator were prepared in the same manner as in Comparative Example 1.

Next, a plurality of positive electrodes, separators, and negative electrodes was automatically laminated in this order using an automatic laminating device different from that of Example 1. In this step, each type of the components is set at a predetermined position in the automatic laminating device, and a positive electrode, a separator and a negative electrode were picked up one by one and laminated automatically. The resulting laminate was inserted into a laminated outer casing in the same manner as in Example 1 to obtain a secondary battery. The number of layers in the laminate was adjusted so that the initial capacity of the secondary battery was 10 Ah.

When the negative electrode laminated in the resulting laminate was inspected with the naked eye, fine wrinkles were observed.

### Evaluation of Productivity

The secondary batteries in the example and the comparative examples were produced over the course of ten minutes. Table 1 shows the number of secondary batteries produced every ten minutes.

### Evaluation of Cycle Characteristics

The cycle characteristics of the secondary batteries produced in the example and the comparative examples were evaluated as follows. A 10 Ah secondary battery was charged at 0.5 A until the voltage reached 4.2 V, and then discharged at 0.5 A until the voltage reached 3.0 V ( "initial discharge"). Then, a cycle of charging at 1.0 A until the voltage reached 4.2 V and then discharging at 1.0 A until the voltage reached 3.0 V was repeated for 100 cycles at a temperature of 25°C. The ratio of the capacity obtained from the discharge after 100 cycles ("capacity after use" below) to the capacity obtained from the initial discharge ("initial capacity" below) (capacity after use/initial capacity or "capacity retention rate" below) was then determined for the example and the comparative examples. The cycle characteristics of each example and comparative example were evaluated using the following criteria. Here, the closer the capacity retention rate is to 100%, the better the cycle characteristics.
A: Capacity retention rate is 80% or more
B: Capacity retention rate is 50% or more and less than 80%
C: Capacity retention rate is less than 50%

Table 1 shows the evaluation of the cycle characteristics of the example and the comparative examples. The initial capacity in each case was 10 Ah. The energy density obtained from the initial capacity of Example 1 was 450 Wh/kg.

**Table 1**

| | Example 1 | Comparative Example 1 | Comparative Example 2 |
|---|---|---|---|
| Number Produced (Units/10 Minutes) | 20 | 1 | 3 |
| Cycle Characteristics | A | B | C |

### Industrial Applicability

Because the secondary battery of the present invention has high energy density, high capacity, and excellent cycle characteristics, it has industrial applicability as a power storage device used in various applications.

### Reference Signs List

100, 200, 700, 800: Secondary battery
110a, 110b: Separator
120: Negative electrode
130, 820: Sheet
140: Positive electrode
150, 830: Laminate
160: Folded portion
170: Flat portion
180: Folded end portion
210: Positive electrode
220: Separator
230: Negative electrode
310: Negative electrode terminal
320: Positive electrode terminal
500: First flat plate
510: Second flat plate
520: First substrate
530: Second substrate
810a, 810b: Solid electrolyte

## Claims

1. A secondary battery comprising:
a laminate formed by alternately folding a sheet at an acute angle a plurality of times, the sheet having a negative electrode that is free of a negative electrode active material, and separators disposed on both surfaces of the negative electrode;
and a plurality of positive electrodes each disposed in a space between separators facing each other formed by folding the sheet.

2. A secondary battery comprising:
a laminate formed by alternately folding a sheet at an acute angle a plurality of times, the sheet having a negative electrode that is free of a negative electrode active material, and solid electrolytes disposed on both surfaces of the negative electrode;
and a plurality of positive electrodes each disposed in a space between solid electrolytes facing each other formed by folding the sheet.

3. The secondary battery according to claim 1 or 2, wherein the secondary battery is a lithium secondary battery in which charging and discharging are performed by depositing lithium metal on the surface of the negative electrode and dissolving the deposited lithium.

4. The secondary battery according to any one of claims 1 to 3, wherein the negative electrode is an electrode consisting of at least one selected from the group consisting of Cu, Ni, Ti, Fe, and other metals that do not react with Li, alloys of these metals, and stainless steel (SUS).

5. The secondary battery according to any one of claims 1 to 4, wherein no lithium foil is formed on the surface of the negative electrode before initial charging.

6. The secondary battery according to any one of claims 1 to 5, wherein the positive electrodes are each disposed so as to be separated from the end of a folded portion of the sheet within a range of 0.01 mm or more and 5.00 mm or less.

7. The secondary battery according to any one of claims 1 to 6, wherein the average thickness of the negative electrode is 4 µm or more and 20 µm or less.

8. The secondary battery according to any one of claims 1 to 7, wherein the energy density is 350 Wh/kg or higher.

9. The secondary battery according to any one of claims 1 to 8, wherein the positive electrode has a positive electrode active material.

10. A method for producing a secondary battery, the method comprising the steps of:
preparing a sheet having a negative electrode free of a negative electrode active material and separators disposed on both sides of the negative electrode; and
forming an article comprising a laminate formed by alternately folding the sheet at an acute angle a plurality of times and a plurality of positive electrodes each disposed in a space between separators facing each other formed by folding the sheet.

11. A method for producing a secondary battery, the method comprising the steps of:
preparing a sheet having a negative electrode free of a negative electrode active material and solid electrolytes disposed on both sides of the negative electrode;
forming an article comprising a laminate formed by alternately folding the sheet at an acute angle a plurality of times and a plurality of positive electrodes each disposed in a space between solid electrolytes facing each other formed by folding the sheet.

12. The method for producing a secondary battery according to claim 10 or 11, wherein the forming step comprises a step of folding the sheet by pressing the sheet from a direction opposite the direction of lamination of the laminate while pushing a first flat plate against the sheet from a first direction perpendicular to the direction of lamination of the laminate and pushing a second flat plate against the sheet from a second direction opposite the first direction.

13. The method for producing a secondary battery according to claim 12, wherein the first flat plate and the second flat plate comprises the positive electrode and a substrate integrated with the positive electrode, and the positive electrode is inserted into each space formed by folding the sheet at the same time the sheet is folded in the folding step.

14. The method for producing a secondary battery according to claim 12, wherein the forming step comprises a step of inserting the positive electrode into each space formed by folding the sheet after the folding step.
